# EUROPEAN PATENT SPECIFICATION

(11) **EP 2 704 396 B1**
(45) Date of publication and mention of the grant of the patent: **31.07.2019**
(21) Application number: 13182855.0
(22) Date of filing: 03.09.2013
(51) Int. Cl.: H04L 29/08, H04L 12/24

(54) **SYSTEM AND METHOD FACILITATING COMMUNICATION IN AN ADAPTIVE VIRTUAL ENVIRONMENT**
SYSTEM UND VERFAHREN ZUR ERMÖGLICHUNG DER KOMMUNIKATION IN EINER ADAPTIVEN VIRTUELLEN UMGEBUNG
SYSTÈME ET PROCÉDÉ FACILITANT LA COMMUNICATION DANS UN ENVIRONNEMENT VIRTUEL ADAPTATIF

(30) Priority: 04.09.2012 IN 2565MU2012
(43) Date of publication of application: 05.03.2014
(73) Proprietor: Tata Consultancy Services Limited, Mumbai 400 021 Maharashtra (IN)
(72) Inventor: Chandel, Priyanka, 400601 Maharashtra (IN); Doke, Pankaj, 400601 Maharashtra (IN); Lobo, Sylvan, 400601 Maharashtra (IN); Gore, Kushal, 400601 Maharashtra (IN); Raza, Ramiz, 400601 Maharashtra (IN); Devkar, Sujit, 400601 Maharashtra (IN); Sunka, Praveen, 400601 Maharashtra (IN); Kimbahune, Sanjay, 400601 Maharashtra (IN)
(74) Representative: Lloyd, Patrick Alexander Desmond

(56) References cited:
- WO-A1-2006/094564
- US-A1- 2008 120 362
- US-A1- 2011 145 272
- US-B2- 7 987 471

## Description

### FIELD OF THE INVENTION

The present invention in general relates to a system and method facilitating communication in a virtual environment. More particularly, the system method facilitates communication by creating multiple virtual images of the communication device and executing said virtual images on the communication device.

### BACKGROUND OF THE INVENTION

In today's age of wireless communication, communication through mobile device is indispensible. Now a days, mobile phones, basically smart phones facilitates a memory with large storage capacity, which allows a user to not only store a large amount of data in it but it also makes a user to maintain all his day-to-day tasks with the help of this small hardware device with magical technical features. This is one of the major reasons why people are extremely dependent on the data stored in the phone.

Loss of the mobile device, loss of the network or discharge of the battery of mobile phone poses a great problem for the mobile phone users as the user is not able to access the data stored in the mobile phone or remain connected with others. Under the above mentioned circumstances the privacy of data stored in the mobile phone is also at a risk in case of loss.

One of the ways to avoid the above mentioned problems is to maintain an offline copy of the data by synchronizing it with a computer, jotting it down somewhere or by simply asking others. However, all the solutions presented above are neither convenient nor scalable and elegant. Moreover, these solutions are very much time consuming.

Since now with the advancement in technology, smart phones have made it possible to enjoy services of two service provider by using dual SIM cards in a single handset. By this, user can communicate economically at the time of roaming and can also choose best data plans.

But again, this feature is dependent on service providers and number of SIM slots in the hardware and also user has to maintain and distribute more than one contact number, which is troublesome. Also, in a case when there is low battery situation, use of more than one SIM cards is also not a feasible solution to remain in contact. Moreover, usage of two SIM cards in a single handset is a feature which is not always supported by all the mobile handsets and user is forced to select such a handset which is capable of providing this facility.

US 2011/0145272 discloses systems for providing a virtual user environment. The system includes an environment server which has a memory for storing a plurality of data blocks and a programmable circuit operatively connected to the memory. The programmable circuit executes program instructions which causes the user computing system to receive profile definition data from a user computing device. The profile definition data includes a manifest of software associated with a user. A plurality of data blocks is selected for returning to the user computing device that are included in a definition of a virtual user environment included in the manifest for delivery to the user computing device.

US 2008/0120362 discloses a single virtual image of client information centrally located at an always-on network location for maintaining equivalency among multiple user devices. Multiple user devices can access an image when coming online to upload and receive changes in the client information. A mid-system can be employed as the always-on central location with which the user client machines can communicate to maintain the same set of client information.

US 7,987,471 discloses a general-purpose proxy mobile device management architecture. The architecture serves as a proxy for a mobile client seeking service from backend systems, A virtual client image of state information associated with the mobile client is stored such that when the mobile client interacts with the proxy, the virtual image updates to the latest client state. The proxy system asynchronously accesses one or more arbitrary services of the backend systems on behalf of the mobile client, based on the changes to the state.

WO 2006/094564 discloses a method for re-routing mobile phone communications involving a GSM phone provided with a subscriber identification module (SIM) allowing TCP/IP connection. This method provides for TCP/IP connection to the dedicated central server comprising a plurality of SIMs corresponding to different GSM networks. The method provides for an emulation of an image of a selected SIM to the GSM phone or a dedicated cooperating separate device, from information provided by a central server, as a virtual SIM, in addition to the actual SIM provided in the GSM phone.

Therefore, there is a need of a solution which is capable of reducing the dependency of a user on a mobile phone in case of data loss, network loss or loss of mobile phone. Also, the solution should provide a feature where a user may communicate without being completely dependent on telecom service providers.

### SUMMARY OF THE INVENTION

The invention is defined in the independent claims, to which reference is now directed. Preferred features are set forth in dependent claims.

The present invention provides a system facilitating communication in an adaptive virtual environment. The system comprises of a virtual network configured to create one or more images of one or more communication devices. The virtual network comprises of an emulation module to emulate one or more features of one or more communication devices and store them in a memory storage unit and a synchronization module configured to synchronize the one or more emulated features in real-time by receiving data from the communication device at a regular interval of time. The synchronization module is further configured to allow a user of the communication device to customize the features stored in the virtual network. The system further comprises of a first communication device communicating with the virtual network for supporting the execution of one or more images thus created by means of a virtual interface. The first communication device comprises of an execution module configured to first install and later run one or more virtual images thus created over the virtual network and a processing device configured to receive a selection of at least one service provider along with a data or calling plan from the user to start communication in the virtual environment for the first time and to generate a unique number for each user irrespective of virtual images owned by the user. The unique number provides an uninterrupted connectivity with people in contact list irrespective of a particular telecom service provider. The system facilitates the communication in the adaptive virtual network such that the virtual network remotely manages the connectivity of the first communication device with one or more telecom service providers by using the respective virtual image. The first communication device further includes a switching module to switch from one service provider to another service provider by selecting the respective virtual image linked with the corresponding telecom service provider.

The present invention also provides a method facilitating communication in a virtual environment. The method comprises of steps of creating one or more virtual images of one or more communication devices in a virtual network, emulating one or more features of one or more communication devices and storing them in the virtual network and synchronizing the emulated features in real-time by receiving data from the communication device at a regular interval of time. The method further comprises of first installing and later running one or more virtual devices in a first communication device, receiving a selection of at least one service provider along with a data or calling plan from the user to start communication in the virtual environment for the first time, generating a unique number for each user irrespective of virtual images to provide connectivity with all people without depending on the particular telecom service provider and remotely managing the connectivity of the first communication device with one or more telecom service providers by using the respective virtual image, and switching from one service provider to another service provider by selecting the respective virtual image linked with the corresponding service provider.

The invention in its various preferred embodiments may provide a system and method for enabling communication in a virtual environment.

Embodiments of the invention may also provide a system and method for emulating one or more features of the communication device and store them in the virtual network.

Embodiments of the invention may further create a universal number for a particular communication device and to provide services of plurality of service providers by using that universal number.

Embodiments of the invention may provide a billing and call routing features with respect to a communication device by using the universal number in the virtual environment.

Embodiments of the invention may provide a virtual interface in the communication device for accessing the information stored in the virtual network by running the virtual images.

### BRIEF DESCRIPTION OF DRAWINGS

Embodiments of the invention will now be described, by way of example only, with reference to the accompanying drawings, in which:
Figure 1 illustrates the architecture of system facilitating communication in a virtual environment in accordance with an embodiment of the invention.
Figure 2 illustrates the detailed architecture of the system facilitating unique number generation and communication in a virtual environment in accordance with an alternate embodiment of the invention.
Figure 3 illustrates the flow of communication in a virtual environment in accordance with an exemplary embodiment of the invention.
Figure 4 illustrates the call routing in accordance with an exemplary embodiment of the invention.
Figure 5 illustrates the flow chart illustrating the steps involved for creating and running a virtual image in an exemplary embodiment of the invention.

### DETAILED DESCRIPTION

Some embodiments of this invention, illustrating its features, will now be discussed:
The words "comprising", "having", "containing", and "including", and other forms thereof, are intended to be equivalent in meaning and be open ended in that an item or items following any one of these words is not meant to be an exhaustive listing of such item or items, or meant to be limited to only the listed item or items.

It must also be noted that as used herein and in the appended claims, the singular forms "a", "an", and "the" include plural references unless the context clearly dictates otherwise.

Although any systems, methods, apparatuses, and devices similar to those described herein can be used in the practice or testing of embodiments of the present invention, the preferred, systems and parts are now described. In the following description for the purpose of explanation and understanding reference has been made to numerous embodiments for which the intent is not to limit the scope of the invention.

One or more components of the invention are described as module for the understanding of the specification. For example, a module may include self-contained component in a hardware circuit comprising of logical gate, semiconductor device, integrated circuits or any other discrete component. The module may also be a part of any software programme executed by any hardware entity for example processor. The implementation of module as a software programme may include a set of logical instructions to be executed by the processor or any other hardware entity. Further a module may be incorporated with the set of instructions or a programme by means of an interface.

The disclosed embodiments are merely exemplary of the invention, which may be embodied in various forms.

The present invention relates to a system and method for facilitating communication in an adaptive virtual environment. The system and method creates one or more virtual images of one or more communication devices by emulating one or more features of the communication device. The virtual images created on a virtual network are executed on the communication device by first installing them and later running them. A unique number is generated for each user in the virtual network itself. The unique number could be provisioned and dynamically commissioned by any of the telecom service provider. We can also try to make the UID (AADHAR) number of a user, provided by Authority of India, a unique number or the user can get the unique universal number along with his UID number. User can maintain plurality of virtual images for utilizing the services of more than one telecom service providers by using this unique number.

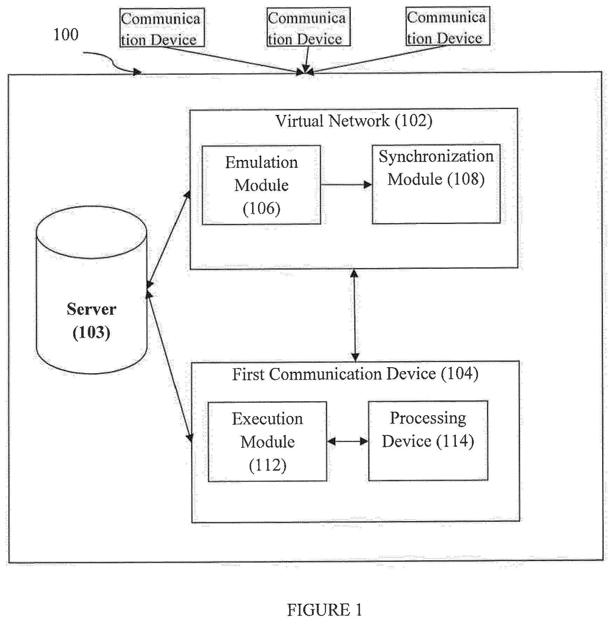

In accordance with an embodiment, referring to figure 1, the system (100) comprises of a virtual network (102) which is configured to create one or more virtual images of one or more communication devices (104). The virtual network (102) further comprises of an emulation module (106) and a synchronization module (108). The system (100) further comprises of a first communication device (104) communicating with the virtual network (102) for supporting the execution of one or more images thus creating a virtual interface in the first communication device itself for supporting the communication in a virtual environment. The first communication device (104) further comprises of an execution module (112) and a processing device (114).

In accordance with an embodiment, still referring to figure 1, the virtual network (102) is configured to create one or more images of one or more communication devices. The virtual network (102) may include but is not limited to internet cloud like AWS, GAE etc. The communication device may include but is not limited to a cell phone, laptop etc.

The virtual network (102) further comprises of the emulation module (106) which is configured to emulate one or more features of one or more communication devices and store them in a memory storage unit. The virtual network (102) is further provided with a plurality of servers (103) with one or more databases having large data storage capacity. All the data emulated by emulation module (106) is further saved in these databases. The emulation module (106) is capable of emulating hardware components (like antennas) via parameterization and configuration of the underline ways physical hardware and also software applications (like call dialing and receiving application). This emulation further supports the configuration of a virtual image in this virtual network where the user can access all his features in the virtual network (102).

One or more features of the communication device emulated by the emulation module (106) may include but is not limited to the application for making or receiving a call, application for browsing internet etc.

The virtual network (102) further comprises of the synchronization module (108) which is configured to synchronize the emulated features in real-time by receiving data from the communication device (104) at a regular interval of time. Data received from the communication device (104) may include but is not limited to contact details stored in a cell phone, image files, text files etc. By way of a specific example, let us consider a case, when a user's memory card gets corrupted and he loses all his data. Since the user has already created the virtual image of his mobile phone, he can now access his lost data by using the virtual interface present in his mobile phone. He simply has to run the virtual image which is present in his mobile phone (in the form of set of programming instructions) which can never be lost/deleted without the user's consent and will remain in the user's mobile phone. When the user is communicating by using this virtual image, he may add new contact details or text or image files in his mobile phone. This newly added data will automatically be saved in the virtual network (102) by means of this synchronization module (108). This process will be done by the system (100) in a continuous manner till the user himself quits or closes the use of virtual image by using the virtual interface. This feature makes the virtual environment adaptive in nature.

The synchronization module (108) acts like a bridge between the virtual network (102) and the communication devices (104). The synchronization module (108) is further configured to allow a user of the communication device to customize the features stored in the virtual network (102). By this, the user may instruct the emulation module (106) to emulate only the features as desired by the user rather emulating all the features.

On the other hand, the synchronization module (108) also allows the user to choose various predesigned applications/features present in the virtual image. The user can choose to have various programs, utility and games prebuilt onto that image. The user can also choose look and feel, skin and customize everything on each virtual image.

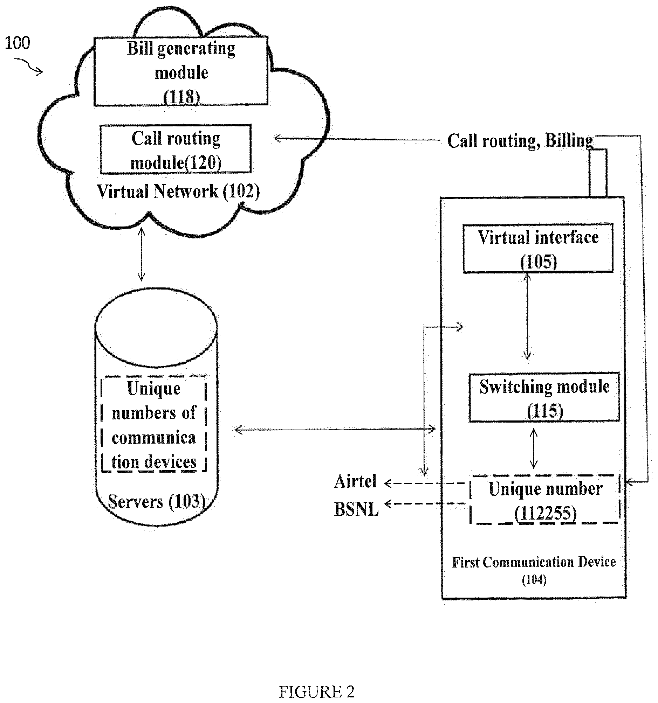

Referring to figure 1 and 2, the system (100) further comprises of the first communication device (104) communicating with the virtual network (102) for supporting the execution of one or more images thus creating the virtual interface (105) inside the first communication device (104) to run and execute the virtual images thus created. The first communication device (104) further comprises of the execution module (112) which is configured to first install and later run one or more virtual images created over the virtual network (102). By way of a specific example, the first communication device (104) is fundamentally capable, like most of the modern smart-phone based devices, to have connectivity via wireless network. The device then connects over wireless network connectivity to the virtual network (102) and upon transactions which are based on credential based access, downloads any of the existing virtual image existing in the virtual image storage path, to the first communication device (104) over wireless network which is essentially an internet or TCPIP connectivity. Once it gets downloaded the entire virtual image runs on the first communication device (104). For the running or execution of the virtual image thus installed, connectivity via internet is not essential. The communication device (104) would now act as a normal mobile device.

Still referring to figure 1 and 2, the first communication device (104) further comprises of the processing device (114) or agent which is configured to generate a unique number for each user irrespective of number of virtual images owned by the user. This unique number provides an uninterrupted connectivity with people in the contact list irrespective of a particular telecom service provider such that the virtual network (102) remotely manages the connectivity of the first communication device (104) with one or more telecom service providers by using the respective virtual image.

There could be multiple ways to generate the unique number which would be used as a universal communication number for the user.. This unique number is the identity of a particular communication device, and is generated or provided by any of the service provider. The user will be registered with all the service providers. However, the unique number will be commissioned based on the user requirement. If the user does not immediately associate the unique number with any of the service provider after generation, then it can be forfeited by the provisioning service provider and recycled to be used for another user. The telecom service providers (like Airtel, BSNL) and PSTN may also be communicated and the information will be provided by the first communication device (104) and the servers (103) for one or more utility purpose and for security protocols.

By way of specific example, let us assume that the user communicates with the virtual network (102) for the first time and selects the features to be emulated and stored in the virtual network and creates a virtual image. It's a mandatory step to select at least one telecom service provider along with the data or calling plan so that the user may start his communication in the virtual environment. Along with this, while creating the virtual image for the first time or choosing the first telecom service provider a unique number is also generated which will be linked to all the telecom service providers in a case when user selects more than one telecom service provider. The user then share this unique number as his contact number and also use services of all the telecom service providers under this unique number.

The switching module (115) of the first communication device (104) is further configured to select one or more telecom service provider from a list stored in the virtual network (104). This selection is performed by log in into the virtual image storage using the credentials.

Again referring to figure 2, the first communication device (104) further comprises of a switching module (115) which is configured to support a feature of switching from one telecom service provider to other. Thus, according to the requirement, the user can switch from one telecom service provider to another telecom service provider by selecting the respective virtual image linked with the corresponding telecom service provider. This switching from one telecom service provider to another occurs without any time delay, as user is registered with all telecom service providers and number commissioning could be done dynamically. Also, the user has no burden of maintaining of the plurality of contact numbers because, he can use the unique number as his universal contact number. This universal number will be responsible for other specific purposes like billing etc.

Again referring to figure 2, the system (100) further comprises of a backend server (103) to support the communication between the virtual network (102) and the first communication device (104).

The virtual network (102) further comprises of a call routing module (120) to enable a feature of call routing by using the virtual image and a bill generating module (118) to generate bill for the first communication device (104) with respect to the service provided by one or more telecom service providers. The bill generated by the bill generating module (118) can be in a consolidated form, i.e. a single bill for all the service providers or a different bill for each service provider. These features of generating a bill or routing a call are further performed by using the universal number.

### BEST MODE/EXAMPLE FOR WORKING OF THE INVENTION

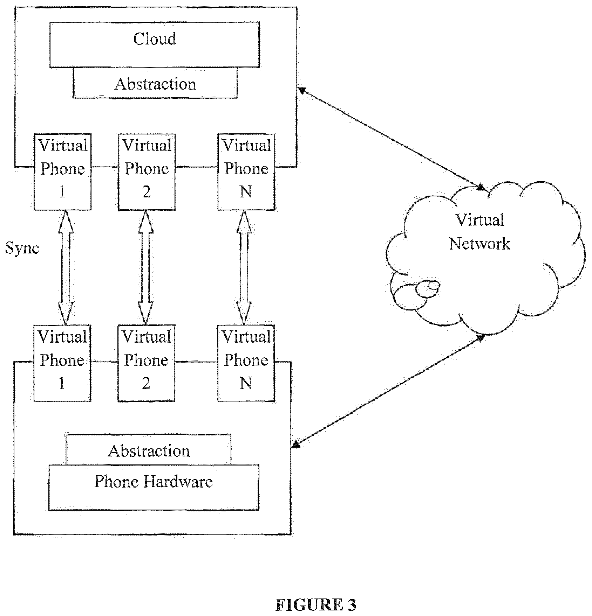

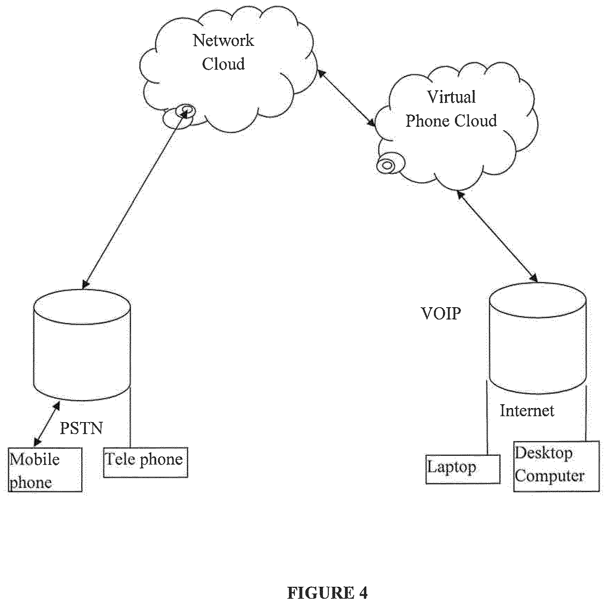

The system and method illustrated to facilitate a communication in an adaptive virtual network may be illustrated by working example stated in the following paragraph; the process is not restricted to the said example only:
Referring to figure 3 and 4, all the virtual images thus created over the virtual network are stored in cloud (backend internet server). The emulated features are stored in the virtual network are synchronized with that of stored in the phone hardware, laptop desktop etc. When someone calls on the unique number, generated by the processing device (114), and if the person doesn't pickup or activate voice message then the call it will land up as a voice message over cloud (virtual network) and the voice call gets recorded and stored in the cloud account of (virtual network) the user. The user can further setup a routing table or a forwarding address (call routing module) for this unique number which has been configured and can be locally routed. Like if the user knows that he is in US then any call which originates from India gets routed over VOIP and gets terminated in a local call and user has access to it via voice mail. The call routing and bill generating feature are supported by connecting to the respective PSTN (Public Switched Telephone Network). Moreover, the unique number is also provided a link with the reference numbers of the said PSTN for supporting all calling features.

### Scenario for a first time user and virtual image creation:

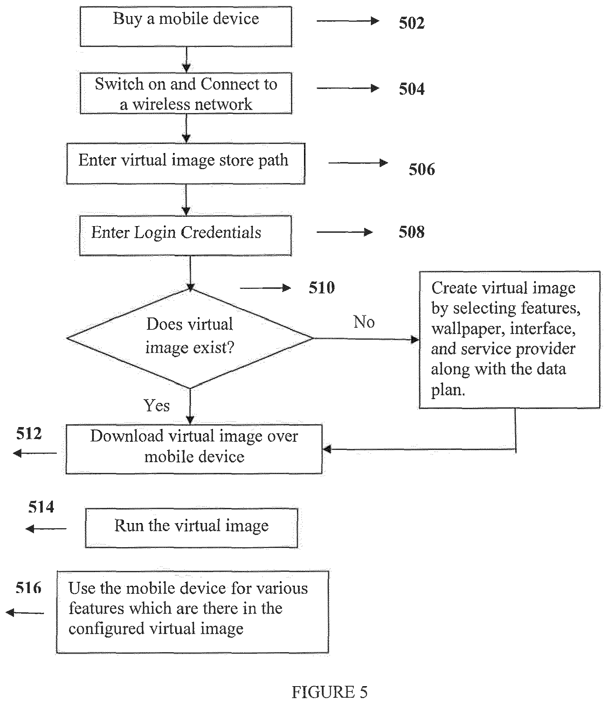

Referring to figure 5, let us consider a user 'A' purchases a communication device say a mobile device (as shown in step 502). Since, the mobile phone is compatible, user 'A' connects to a wireless network in order to browse the internet (as shown in step 504). The user 'A' then enters the virtual image store path (as shown in step 506) where created virtual images of his mobile phones are stored. Here, the user is asked to provide his login credentials in order to initiate the process of download of virtual image (as shown in step 508). The user 'A' then checks the virtual image storage system whether virtual image which the user wants to create already exists or not.

If the image does not exist, user 'A' then starts creating the virtual image of his mobile phone. The virtual image is created by selecting mobile phone's features, wallpaper, interface and service provider along with the data plan (as shown in step 510). The emulation module emulates all the features selected by the user 'A'.

In case, the virtual image existed there, the user A can download it over his mobile phone (as shown in step 512). This will also create a virtual interface on the user A's mobile phone, by which he can run the virtual image (as shown in step 514). Also, the user A's mobile device will be provided with either a switch, a dial mechanism or a key for connecting to the virtual image repository for switching the virtual image or user A can use wireless network to again connect to the virtual image repository.

Once, the image is successfully downloaded and run, user A can use the mobile phone and can use various features like call dialing, receiving, browsing internet, chatting, sending messages etc which are there in the configured virtual image (as shown in step 516).

## Claims

1. A system for facilitating communication in an adaptive virtual environment, the system comprising:
a virtual network configured to create one or more images of one or more communication devices, the virtual network comprising:
an emulation module (106) to emulate hardware and software configuration of the one or more communication devices, in a virtual image, and one or more features of the one or more communication devices;
a memory to store the one or more emulated features;
a synchronization module (108) configured to synchronize the one or more emulated features in real-time by receiving data from the one or more communication devices at a regular interval of time, wherein the synchronization module (108) further allows a user of the one or more communication devices to select the one or more emulated features and to customize the one or more features stored in the virtual network;
a first communication device (104) communicating with the virtual network for supporting the execution of one or more images created by a virtual interface comprising:
an execution module (112) to install the one or more emulated features desired by the user in the first communication device (104), and run the virtual images created over the virtual network;
a processing device to receive a selection of at least one service provider along with a data or calling plan from the user to start communication in the virtual environment for the first time and to generate a unique number for the user, irrespective of virtual images owned by the user, wherein the unique number provides an uninterrupted connectivity with people in a contact list irrespective of a particular telecom service provider, such that the virtual network remotely manages the connectivity of the first communication device (104) with one or more telecom service providers by using the respective virtual image; and
a switching module to switch from one service provider to another service provider by selecting the respective virtual image linked with the corresponding telecom service provider.

2. The system as claimed in claim 1, wherein one or more features of the one or more communication devices comprises an application for making or receiving a call and an application for browsing internet.

3. The system as claimed in claim 1, wherein the data received from the one or more communication devices comprises contact details, image files, and text files.

4. The system as claimed in claim 1 further comprises of a call routing module to enable call routing by using the one or more emulated features, and a bill generating module to generate a bill for the first communication device for services provided by the one or more telecom service providers.

5. A method for facilitating communication in a virtual environment, the method comprising:
creating one or more virtual images of one or more communication devices in a virtual network;
emulating the one or more features of the one or more communication devices in the virtual network;
storing the one or more emulated features in a memory;
synchronizing the memory with a communication device to receive data at a regular interval of time from the one or more communication devices;
selecting the one or more emulated features desired to a user of the one or more communication devices;
installing, on a first communication device, the or more emulated features desired to the user;
receiving a selection of at least one service provider along with a data or calling plan from the user to start communication in the virtual environment for the first time;
generating a unique number for the user irrespective of virtual images, wherein the unique number provides an uninterrupted connectivity with people in a contact list irrespective a particular telecom service provider;
switching from one service provider to another service provider by selecting the respective virtual image linked with the corresponding service provider.

6. The method as claimed in claim 5, further comprises enabling call routing and generating bills for services provided by the one or more telecom service providers in the virtual environment.

7. The method as claimed in claim 5, further comprises selecting one or more telecom service provider from a list of the telecom service providers stored in the memory.

## Patentansprüche

1. System zum Erleichtern von Kommunikationen in einer adaptiven virtuellen Umgebung, wobei das System Folgendes umfasst:
ein virtuelles Netzwerk, konfiguriert zum Erzeugen von einem oder mehreren Bildern von einem oder mehreren Kommunikationsgeräten, wobei das virtuelle Netzwerk Folgendes umfasst:
ein Emulationsmodul (106) zum Emulieren von Hardware- und Software-Konfigurationen der ein oder mehreren Kommunikationsgeräte in einem virtuellen Bild und von einem oder mehreren Merkmalen der ein oder mehreren Kommunikationsgeräte;
einen Speicher zum Speichern der ein oder mehreren emulierten Merkmale;
ein Synchronisationsmodul (108), konfiguriert zum Synchronisieren der ein oder mehreren emulierten Merkmale in Echtzeit durch Empfangen von Daten von den ein oder mehreren Kommunikationsgeräten in einem regelmäßigen Zeitintervall, wobei das Synchronisationsmodul (108) es ferner einem Benutzer der ein oder mehreren Kommunikationsgeräte erlaubt, die ein oder mehreren emulierten Merkmale auszuwählen und die in dem virtuellen Netzwerk gespeicherten ein oder mehreren Merkmale kundenspezifisch anzupassen;
ein erstes Kommunikationsgerät (104), das mit dem virtuellen Netzwerk zum Unterstützen der Ausführung von einem oder mehreren durch eine virtuelle Schnittstelle erzeugten Bildern kommuniziert und Folgendes umfasst:
ein Ausführungsmodul (112) zum Installieren der von dem Benutzer im ersten Kommunikationsgerät (104) gewünschten ein oder mehreren emulierten Merkmale und zum Leiten der erzeugten virtuellen Bilder über das virtuelle Netzwerk;
ein Verarbeitungsgerät zum Empfangen einer Auswahl von wenigstens einem Diensteanbieter zusammen mit einem Daten- oder Anrufplan vom Benutzer zum erstmaligen Starten von Kommunikationen in der virtuellen Umgebung und zum Erzeugen einer eindeutigen Nummer für den Benutzer unabhängig von virtuellen Bildern im Besitz des Benutzers, wobei die eindeutige Nummer eine ununterbrochene Konnektivität mit Personen in einer Kontaktliste unabhängig von einem bestimmten Telekommunikationsdiensteanbieter bereitstellt, so dass das virtuelle Netzwerk die Konnektivität des ersten Kommunikationsgeräts (104) mit einem oder mehreren Telekommunikationsdiensteanbietern durch Verwenden des jeweiligen virtuellen Bildes fernverwaltet; und
ein Umschaltmodul zum Umschalten von einem Diensteanbieter auf einen anderen Diensteanbieter durch Auswählen des jeweiligen mit dem entsprechenden Telekommunikationsdiensteanbieter verknüpften virtuellen Bildes.

2. System nach Anspruch 1, wobei ein oder mehrere Merkmale der ein oder mehreren Telekommunikationsgeräte eine Anwendung zum Durchführen oder Empfangen eines Anrufs und eine Anwendung für Internet-Browsing umfassen.

3. System nach Anspruch 1, wobei die von den ein oder mehreren Kommunikationsgeräten empfangenen Daten Kontaktangaben, Bilddateien und Textdateien umfassen.

4. System nach Anspruch 1, das ferner ein Anrufleitmodul, um es zu ermöglichen, dass ein Anruf anhand der ein oder mehreren emulierten Merkmale geleitet wird, und ein Rechnungserzeugungsmodul zum Erzeugen einer Rechnung für das erste Kommunikationsgerät für von den ein oder mehreren Telekommunikationsdiensteanbietern bereitgestellte Dienste umfasst.

5. Verfahren zum Erleichtern von Kommunikationen in einer virtuellen Umgebung, wobei das Verfahren Folgendes beinhaltet:
Erzeugen von einem oder mehreren virtuellen Bildern von einem oder mehreren Kommunikationsgeräten in einem virtuellen Netzwerk;
Emulieren der ein oder mehreren Merkmale der ein oder mehreren Kommunikationsgeräte in dem virtuellen Netzwerk;
Speichern der ein oder mehreren emulierten Merkmale in einem Speicher;
Synchronisieren des Speichers mit einem Kommunikationsgerät zum Empfangen von Daten in einem regelmäßigen Zeitintervall von den ein oder mehreren Kommunikationsgeräten;
Auswählen der ein oder mehreren von einem Benutzer der ein oder mehreren Kommunikationsgeräte gewünschten emulierten Merkmale;
Installieren der von dem Benutzer gewünschten ein oder mehreren emulierten Merkmale auf einem ersten Kommunikationsgerät;
Empfangen einer Auswahl von wenigstens einem Diensteanbieter zusammen mit einem Daten- oder Anrufplan von dem Benutzer zum erstmaligen Starten von Kommunikationen in der virtuellen Umgebung;
Erzeugen einer eindeutigen Nummer für den Benutzer unabhängig von virtuellen Bildern, wobei die eindeutige Nummer eine ununterbrochene Konnektivität mit Personen in einer Kontaktliste unabhängig von einem bestimmten Telekommunikationsdiensteanbieter bereitstellt;
Umschalten von einem Diensteanbieter auf einen anderen Diensteanbieter durch Auswählen des mit dem entsprechenden Diensteanbeiter verknüpften jeweiligen virtuellen Bildes.

6. Verfahren nach Anspruch 5, das ferner das Ermöglichen von Anrufleiten und das Erzeugen von Rechnungen für von den ein oder mehreren Telekommunikationsdiensteanbietern in der virtuellen Umgebung bereitgestellten Diensten beinhaltet.

7. Verfahren nach Anspruch 5, das ferner das Auswählen von einem oder mehreren Telekommunikationsdiensteanbietern aus einer im Speicher gespeicherten Liste der Telekommunikationsdiensteanbieter beinhaltet.

## Revendications

1. Système destiné à faciliter la communication dans un environnement virtuel adaptatif, le système comprenant :
un réseau virtuel configuré pour créer une ou plusieurs images d'un ou de plusieurs dispositifs de communication, le réseau virtuel comprenant :
un module d'émulation (106) pour émuler une configuration matérielle et logicielle de l'un ou de plusieurs dispositifs de communication, dans une image virtuelle, et une ou plusieurs caractéristiques de l'un ou de plusieurs dispositifs de communication ;
une mémoire pour stocker l'une ou plusieurs caractéristiques émulées ;
un module de synchronisation (108) configuré pour synchroniser l'une ou plusieurs caractéristiques émulées en temps réel en recevant des données de l'un ou de plusieurs dispositifs de communication à un intervalle de temps régulier, où le module de synchronisation (108) permet en outre à un utilisateur de l'un ou de plusieurs dispositifs de communication de sélectionner l'une ou plusieurs caractéristiques émulées et de personnaliser l'une ou plusieurs caractéristiques émulées stockées dans le réseau virtuel ;
un premier dispositif de communication (104) communiquant avec le réseau virtuel pour prendre en charge l'exécution d'une ou de plusieurs images créées par une interface virtuelle comprenant :
un module d'exécution (112) pour installer l'une ou plusieurs caractéristiques émulées désirées par l'utilisateur dans le premier dispositif de communication (104), et passer les images virtuelles créées sur le réseau virtuel ;
un dispositif de traitement pour recevoir une sélection d'au moins un fournisseur de services avec un plan de données ou d'appels de l'utilisateur pour commencer une communication dans l'environnement virtuel pour la première fois et pour générer un numéro unique pour l'utilisateur, indépendamment des images virtuelles appartenant à l'utilisateur, où le numéro unique fournit une connectivité ininterrompue avec des personnes dans une liste de contacts indépendamment d'un fournisseur de services télécoms particulier, de telle sorte que le réseau virtuel gère à distance la connectivité du premier dispositif de communication (104) avec un ou plusieurs fournisseurs de services télécoms en utilisant l'image virtuelle respective, et
un module de commutation pour commuter d'un fournisseur de services à un autre fournisseur de services en sélectionnant l'image virtuelle respective liée au fournisseur de services télécoms correspondant.

2. Système selon la revendication 1, dans lequel une ou plusieurs caractéristiques de l'un ou de plusieurs dispositifs de communication comprennent une application pour faire ou recevoir un appel et une application pour naviguer sur l'internet.

3. Système selon la revendication 1, dans lequel les données reçues de l'un ou de plusieurs dispositifs de communication comprennent des détails de contacts, des fichiers d'images et des fichiers de texte.

4. Système selon la revendication 1, comprenant en outre un module d'acheminement d'appels pour permettre l'acheminement d'un appel en utilisant l'une ou plusieurs caractéristiques émulées, et un module de génération de facture pour générer une facture pour le premier dispositif de communication pour les services fournis par l'un ou plusieurs fournisseurs de services télécoms.

5. Procédé destiné à faciliter la communication dans un environnement virtuel, le procédé comprenant :
créer une ou plusieurs images virtuelles d'un ou de plusieurs dispositifs de communication dans un réseau virtuel ;
émuler l'une ou plusieurs caractéristiques de l'un ou de plusieurs dispositifs de communication dans le réseau virtuel ;
stocker l'une ou plusieurs caractéristiques émulées dans une mémoire ;
synchroniser la mémoire avec un dispositif de communication pour recevoir des données à un intervalle de temps régulier de l'un ou de plusieurs dispositifs de communication ;
sélectionner l'une ou plusieurs caractéristiques émulées désirées d'un utilisateur de l'un ou de plusieurs dispositifs de communication ;
installer, sur un premier dispositif de communication, l'une ou plusieurs caractéristiques émulées désirées de l'utilisateur ;
recevoir une sélection d'au moins un fournisseur de services avec un plan de données ou d'appels de l'utilisateur pour commencer une communication dans l'environnement virtuel pour la première fois ;
générer un numéro unique pour l'utilisateur indépendamment des images virtuelles, où le numéro unique fournit une connectivité ininterrompue avec des personnes dans une liste de contacts indépendamment d'un fournisseur de services télécoms particulier ;
commuter d'un fournisseur de services à un autre fournisseur de services en sélectionnant l'image virtuelle respective liée au fournisseur de services correspondant.

6. Procédé selon la revendication 5, comprenant en outre permettre l'acheminement d'appels et la génération de factures pour les services fournis par l'un ou plusieurs fournisseurs de services télécoms dans l'environnement virtuel.

7. Procédé selon la revendication 5, comprenant en outre sélectionner un ou plusieurs fournisseurs de services télécoms parmi une liste de fournisseurs de services télécoms stockée dans la mémoire.
